# EUROPÄISCHE PATENTANMELDUNG

(11) **EP 1 046 844 A2**
(43) Veröffentlichungstag der Anmeldung: **25.10.2000**
(21) Anmeldenummer: 00108577.8
(22) Anmeldetag: 19.04.2000
(51) Int. Cl.: F16K 11/048

(54) **Dreiwegeregelventil**

(30) Priorität: 20.04.1999 SI 9900095
(71) Anmelder: Aljosa Rovan, 8250 Brezice (SI)
(72) Erfinder: Rovan, Aljosa, 8250 Brezice (SI); Medvescek, Milan, 8250 Brezice (SI)
(74) Vertreter: Viering, Jentschura & Partner

(57) **Zusammenfassung**

Im Dreiwegeregelventil sind beide Ventilteller (3,24) beweglich auf einer Steuerachse (21) angebracht. Im oberen Teller (3) ist ein Feder (10) eingebaut, die beide Teller (3,24) zusammen in Richtung der Schließ-Stellung drückt. In mittlerer Lage der Steuerachse (21) sind beide Teller (3,24) dicht geschlossen. Wenn sich die Steuerachse (21) nach oben bewegt, bleibt der untere Teller (24) unter Krafteinfluss der Feder (10) noch weiter dicht geschlossen, während sich der obere (3) dagegen aber öffnet und umgekehrt. So kann man mit einem Ventil und einem Motorantrieb zwei Regelkreise regulieren, wobei ein Kreis beliebig geöffnet und der andere aber dicht geschlossen sein kann. Wenn die Sicherheitsfunktion aktiviert ist, bewegt sich die Steuerachse gegen die obere äußerste Stellung und schließt die Durchgangsöffnung des unteren Tellers weiter dicht und danach noch den Sicherheitsteller. Die Geometrie der Teller ist so ausgeführt, dass das Medium bei relativer Bewegung der Teller nicht in das Innere der Teller eintritt und die Spalten in den Führungslagern nicht verstopft. Auf der Austrittseite ist ein axialer Volumenstromregler (27) eingebaut, der den Volumenstrom steuert und zugleich beide Teller druckentlastet.

## Beschreibung

Die Erfindung betrifft ein Dreiwegeventil mit eingebautem Volumenstromregler.

Herkömmliche Dreiwegeventile haben drei Rohrleitungsanschlüsse, um als Steuerung von Produktströmen in der pneumatischen und hydraulischen Steuerungstechnik zu dienen. Das Ventil mischt dabei entweder zwei Produktströme in eine Abflussleitung oder teilt einen Produktstrom auf zwei Abströme auf. Dreiwegeventile verfügen im Stand der Technik diesbezüglich über einen Drosselkörper, der zwischen zwei Ventilsitzen axial verschiebbar ist.
Mit einem derartigen Drosselkörper ist es jedoch nicht möglich, die jeweiligen Zu- bzw. Abströme unabhängig voneinander zu steuern. Eine gleichzeitige Sicherheitsabsperrung beider Seiten ist nicht möglich.

Aufgabe der Erfindung ist es, ein Dreiwegeregelventil vorzusehen, mit dem eine unabhängige Steuerung der jeweiligen Zu- bzw. Abströme möglich ist, und das eine Sicherheitsstellung vorsieht.

Demgemäß weist das Dreiwegeventil der Erfindung ein Gehäuse auf, in dem ein erster und zweiter Ventilteller auf einer Steuerachse unabhängig voneinander bewegbar sind. An dem ersten Teller sitzt eine Feder, die diesen Teller gegen seinen Dichtungssitz drückt und zugleich den anderen Teller gegen dessen Dichtungssitz drückt. Die Steuerachse weist einen Steuerkopf, beispielsweise eine Schraubenmutter, auf, über die die Ventilteller aus ihrer Dichtungslage bewegt werden. In der Ruhestellung der Steuerachse befinden sich beide Ventilteller aufgrund der Federkraft sicher in ihrem jeweiligen Dichtungssitz und die Mutter übt keine Kraft auf die Ventilteller aus. Wenn nun die Steuerachse aus ihrer Ruhelage axial verschoben wird, öffnet sie entgegen der Federkraft über die Mutter den Durchgang des ersten Ventiltellers, während der Durchgang des zweiten Ventiltellers aufgrund der Federkraft weiter sicher verschlossen bleibt. Wird nun die Steuerachse über die Mittellage hinaus in die andere axiale Richtung verschoben, drückt die Mutter über einen Mechanismus oder direkt auf den zweiten Teller, um dessen Durchgangsöffnung zu öffnen. In dieser Stellung ist die Durchgangsöffnung des ersten Ventiltellers aufgrund der Federkraft dicht verschlossen. So können mit einem Ventil und einem Motorantrieb zwei Regelkreise geregelt werden, wobei ein Regelkreis beliebig geöffnet, der andere aber dicht geschlossen sein kann. Vorteil ist ein um die Hälfte geringerer Preis und ein geringerer Platzbedarf, der besonders in kleinen Kompaktstationen für Fernwärmeversorgung relevant ist.

Wenn die eine Eintrittsöffnung geöffnet ist, ist die andere Eintrittsöffnung vollständig verschließbar. Im Normalbetrieb können beide Richtungen gleichzeitig geschlossen werden. Im Falle eines Stromausfalls, also eines Störungsbetriebes, sind beide Richtungen dicht geschlossen. Das Ventil ist insbesondere für den Einbau in Hausstationen geeignet, wo mit einem Ventil und Motorantrieb gleich zwei Regelkreise, beispielsweise die Heizung und das Brauchwasser reguliert werden.

Die Erfindung hat folgende Vorteile:
- Mit einem Ventil und Motorantrieb können zwei Regelkreise geregelt werden, wobei ein Kreis beliebig geöffnet, der andere dagegen dicht geschlossen werden kann und umgekehrt.
- Im Fall eines Stromausfalles sind beide zu steuernden Öffnungen dicht verschlossen, wenn die Sicherungsfeder im Motorantrieb die Ventilachse in ihre Endlage schiebt.
- Der hinzugefügte Volumenstromregler reguliert den Volumenstrom auf jeder Seite extra, da der maximale Volumenstrom nicht immer für beide Richtungen gleich ist.
- Die relative Bewegung der Achse und der Ventilteller bewirkt keine Pumpwirkung des Mediums durch die Spalten der inneren Gleitflächen, damit kein feiner Schmutz, den das Medium (Wasser) mit sich trägt, die engen Spalten verstopfen und die Funktion des Ventils blockieren kann.
- Der Volumenstrom des Mediums trifft nicht in die empfindlichen Spalten der beweglichen Ventilteller.
- Im Fall einer Undichtigkeit des Volumenstromreglers, der zugleich die zwei Ventilteller entlastet, wirkt der Druck des Mediums auf die Ventilteller in Schließrichtung.

Zur Schaffung einer Sicherheitsstellung ist das Dreiwegeventil vorzugsweise mit einem dritten Sicherheitsteller versehen. Wenn der elektrische Strom ausfällt, wird die Sicherheitsfunktion aktiviert. Die Steuerachse bewegt sich zur oberen Endposition und schließt zuerst die Durchgangsöffnung des zweiten Ventiltellers und öffnet danach für kurze Zeit völlig die Durchgangsöffnung des ersten Ventiltellers. Doch die Achse wandert noch ein wenig weiter und schließt mit dem dritten, dem Sicherheitsteller den Durchgang zum ersten Ventiltellers dicht ab. So ist eine Sicherheitsfunktion gewährleistet, die der Gesetzgeber verlangt.

Der Impuls (V+) für den Volumenstromregler kann nur vor dem unteren, dem zweiten Teller abgenommen werden. Sonst würde im Falle einer Sicherheitsschließung, wenn auch der Durchgang des Ventiltellers geschlossen ist, der Volumenstromregler geöffnet bleiben und beide Teller wären entlastet. Weil jeder Ventilteller für seine Richtung gleichzeitig auch die Drossel für die Steuerung (Pilot) des Volumenstromreglers ist, kann man mit der Begrenzung des maximalen Hubes jedes einzelnen Tellers den Volumenstrom in der einzelnen Richtung beliebig drosseln. Die Begrenzung des Hubes darf im Fall der Sicherheitsschließung nicht funktionieren. Deshalb ist die Hubbegrenzung mit der Messung der Lage der Steuerachse und einem entsprechendem Parameter im Programm des digitalen Reglers ausgeführt, der den Hub der Steuerachse definiert.

Die Fläche, mit der der obere Teller auf der Verlängerung des unteren Tellers gleitet, entspricht der Fläche der Steuerachse, die auf der inneren Seite des unteren Teiles auf der Verlängerung des zweiten, d.h. des unteren Tellers gleitet. So ist das Pumpen des Volumenstrommediums in das Innere der beiden Teller vollständig verhindert. Der Innenraum wird mit dem Medium gefüllt und zwar nur einmal bei der ersten Füllung. Das Medium und der Schmutz haben dann keinen Eintritt mehr in den Innenraum.

Der untere Teller hat vorzugsweise eine rohrförmige Verlängerung, die zu dem ersten, dem oberen Teller führt. Der Spalt zwischen der Verlängerung und dem oberen Teller ist mit einem Abstreifring aus Filz oder Gummi verschlossen. So hat der untere Teller überhaupt keinen Spalt mehr, der dem Strom des Mediums entgegengesetzt ist. Der obere Teller hat dagegen einen Spalt, der mit einem Abstreifer geschützt und ziemlich weit von dem Strahl des Mediums am unteren Teller entfernt angeordnet ist. Damit ist die Möglichkeit eines Schmutzeintritts und einer Unterbrechung der Arbeitsweise verhindert.

Beide Teller sind so eingebaut, dass sie mit der Federkraft und dem Druck des Mediums geschlossen werden, andererseits aber mit der Kraft des Motorantriebes geöffnet werden können. So ist die Möglichkeit einer Undichtigkeit verhindert, wenn der Volumenstromregler undicht ist und die Teller nicht entlastet sind.

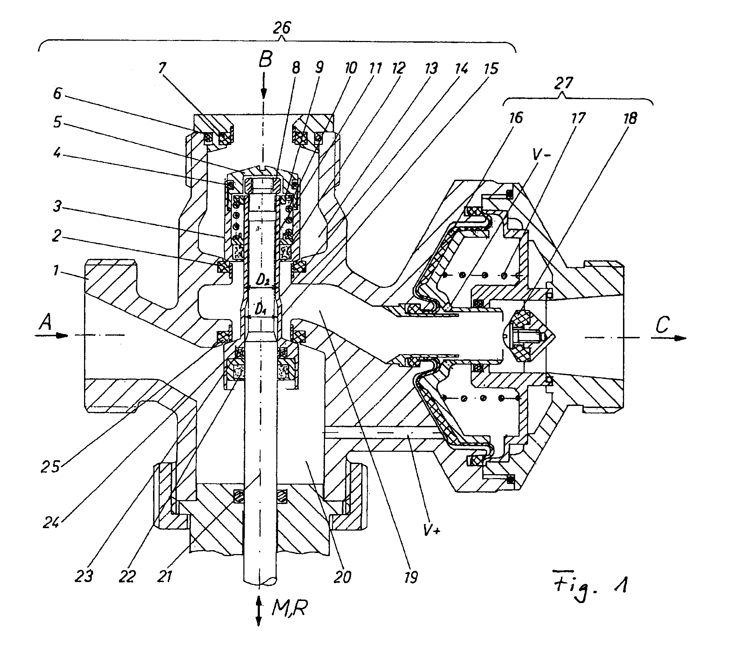

Im Folgenden wird nun die Erfindung unter Bezug auf die beigefügte Zeichnung näher erläutert. In dieser zeigt die
Fig. 1 den Querschnitt durch eine Ausführungsform des erfindungsgemäßen Dreiwegeregelventils.

Im gemeinsamen Gehäuse 1 ist ein Dreiwegeregelventil 26 und ein axialer Volumenstromregler 27 eingebaut. Das Dreiwegeventil hat drei Sitze und zwar den unteren Sitz 25, den oberen Sitz 2 und den Sicherheitssitz 7, und drei Ventilteller und zwar einen unteren Teller 24, einen oberen Teller 3 und einen Sicherheitsteller 5. Die Teller sind bewegbar auf der Steuerachse 21 angeordnet. Der untere Teller ist gegen die Achse mit einer Dichtung 23 abgedichtet und gegen Schmutzeintritt mittels eines Abstreifers 22 geschützt. Der untere Teller hat eine rohrförmige Verlängerung 14, die in das Innere des oberen Tellers 3 hinein reicht. Der Innendurchmesser D1 des unteren Teils 15 der rohrförmigen Verlängerung 14 entspricht dem Außendurchmesser D2 der Steuerachse 21 auf dem oberen Ende 11. Damit verursacht der Hub der Steuerachse 21 keine Pumpwirkung des Mediums von der Außenseite der Teller auf die Innenseite. Im oberen Teller 3 ist eine Feder 10 eingebaut, die über eine Konsole 9 und eine rohrförmige Verlängerung 14 auf den unteren Teller 24 drückt und ausreichend Kraft für das dichte Schließen beider Teller hat. Der Eintritt ins Innere des oberen Tellers ist mit einem Abstreifer 12 geschützt. Der Sicherungsteller 5 ist in den oberen Teil des oberen Tellers eingedreht und mit einer Dichtung 4 abgedichtet. Der Sicherheitssitz ist frei im Gehäuse eingefügt und mit einer Dichtung 6 abgedichtet. Die Steuerachse 21 hat auf dem Scheitel eine Mutter 8, die mit dem unteren Teil leicht auf den unteren Teller drücken kann und mit dem oberen dagegen auf den oberen Teller drücken kann.

Das Medium kann aus zwei Richtungen A und B in das Gehäuse eintreten. Wenn es aus der Richtung A in die Unterkammer 20 eintritt, fließt es neben dem unteren Teller in die Unterkammer 19 und tritt am Teller 18 vorbei durch den axialen Volumenstromregler 27 bis zum Austritt C. Der Druck des Mediums in der Mittelkammer wirkt durch die Impulsbohrung V+ auf eine Seite der Membran 16 im Volumenstromregler 27, dagegen wirkt der Druck des Mediums aus der Mittelkammer durch die Impulsbohrung V- auf die andere Seite der Membran und versucht zusammen mit der Regulierfeder 17 den Volumenstromregler 27 zu öffnen. Wenn das Medium in der Richtung B eintritt, fließt es vorbei am Sicherungsteller in die Oberkammer 13 und dann vorbei am oberen Teller in die Mittelkammer und tritt dann durch den Volumenstromregler in Richtung C aus.

Wenn sich die Steuerachse 21 in der mittleren Lage befindet und sich die Mutter 8 mit keinem Teller berührt, sind beide Teller dicht geschlossen. Sie werden durch die Kraft der Feder 10 und die Druckdifferenz zwischen der unteren und mittleren Kammer, bzw. oberen und mittleren Kammer geschlossen. Wenn sich die Steuerachse 21 aus der mittleren Lage nach unten bewegt, drückt die Mutter 8 auf den unteren Teller 24. Die Feder 10 wird zusammengedrückt und der untere Teller kann um den ganzen Weg vom Teller wegrücken. Dabei bleibt die Durchgangsöffnung des oberen Tellers dicht geschlossen. Wenn sich die Steuerachse aus der mittleren Lage nach oben bewegt, drückt sie auf den Sicherungsteller und zieht zusammen mit ihm den oberen Teller 3 nach oben. Dabei drückt der obere Teller auf die Feder 10 und der untere Teller verschließt dessen Durchgangsöffnung. Wenn er den oberen Teller 3 erreicht, stoppt die gesamte Steuerungsachse. Wenn aber der obere Teller 3 den gesamten Weg macht, stoppt die Steuerungsachse. Wenn aber eine Sicherheits-Schliessung beider Seiten nötig ist, rückt die Steuerachse noch für einen Weg nach oben, die Feder dagegen wird weiter zusammengedrückt und der Sicherungsteller 5 schließt dicht.

Für eine richtige Funktion muss die Steuerachse 21 immer in der richtigen, genau definierten Lage sein. Die Lage der Steuerachse wird mit einem entsprechenden Wegmesser M gemessen und mit Hilfe des Reglers R eingestellt, der in Beziehung mit den regulierten Parametern wirkt. Die Volumenstrombegrenzung kann für jede Richtung A und B anders sein. Erzielt wird sie mit der entsprechenden Wegbegrenzung des unteren und oberen Tellers. Wenn die Sicherheits-Schliessung beider Seiten nötig ist, gibt es keine Wegbegrenzung des oberen Tellers.

## Patentansprüche

1. Dreiwegeregelventil, das ein gemeinsames Gehäuse (1) aufweist, wobei auf der Steuerachse (21) ein unterer Teller (24) und ein oberer Teller (3) beweglich angeordnet sind, wobei im Inneren des oberen Tellers eine Feder (10) eingebaut ist, die den oberen Teller gegen seinen oberen Sitz (2) und gleichzeitig den unteren Teller (24) über eine Konsole (9) und den rohrförmigen Ansatz (14) gegen den unteren Sitz (25) drückt, wobei der untere Teller mit einer Dichtung (23) gegen die Steuerachse (21) abgedichtet ist, und in mittlerer Lage der Steuerachse die Mutter (8) keinen Teller berührt und deshalb beide Teller unter Federbelastung und Mediumdruck auf die Sitze gedrückt sind und ihre Durchgangsöffnungen fest geschlossen sind, wenn sich aber die Steuerachse (21) aus mittlerer Lage nach oben bewegt, drückt die Mutter (8) auf den oberen Teller (3) und öffnet ihn, wobei der untere Teller (24) unter Kraft der Feder (10) seine Durchgangsöffnung weiter dicht verschließt, wenn sich aber die Steuerachse (21) aus der mittleren Lage nach unten bewegt, dann drückt die Mutter (8) über einen rohrförmigen Ansatz (14) auf den unteren Teller (24) und öffnet ihn, wobei der obere Teller (3) unter Kraft der Feder (10) weiter dicht verschlossen bleibt.

2. Dreiwegeregelventil nach Anspruch 1, wobei auf der oberen Seite des oberen Tellers (3) ein Sicherheitsteller (5) angebracht ist, der mit einer Dichtung (4) abdichtet, und über ihm im Gehäuse (1) ein Sicherheitssitz (7) angeordnet ist, der mit einer Dichtung (6) abgedichtet ist, wobei in mittlerer Lage der Steuerachse (21) die Entfernung zwischen dem Sicherheitsteller (5) und dem Sicherheitssitz (7) ungefähr doppelt so groß wie der Weg des oberen Tellers (3) ist, und in der oberen Lage der Steuerachse (21) ein Sicherheitsteller (5) auf den Sicherheitssitz (7) drückt und diesen damit dicht verschließt, zugleich aber unter der Kraft der Feder (10) auch der untere Teller (24) dicht geschlossen ist.

3. Dreiwegeregelventil nach Anspruch 1, wobei der Durchmesser (D1) der Steuerachse (21) im Bereich des unteren Tellers (24) und der Dichtung (23) ungefähr gleich dem äußeren Durchmesser (D2) des oberen Teiles (11) des rohrförmigen Ansatzes (14) ist, auf welchem der Abstreifer (12) gleitet, der den Eintritt von Schmutz in das Innere des oberen Tellers (3) verhindert.

4. Dreiwegeregelventil nach Anspruch 1, wobei im unteren Teller (24) vor der Dichtung (23) ein eingebauter Abstreifer (22) vorgesehen ist, der den Eintritt von Schmutz in die Dichtung (23) verhindert.

5. Dreiwegeregelventil nach Anspruch 1, wobei der untere Teller (24) und der obere Teller (3) so auf der Steuerachse (21) angebracht sind, dass der untere Teller (24) zusätzlich zur Kraft der Feder (10) auch durch den Druckunterschied des Mediums zwischen der unteren (20) und mittleren (19) Kammer, und der obere Teller (3) zusätzlich zur Kraft der Feder (10) auch durch den Druckunterschied des Mediums zwischen der oberen (13) und mittleren (19) Kammer geschlossen werden, und das Medium in Richtung (A) durch die Unterkammer (20) vorbei am unteren Teller (24) in die Mittelkammer (19) und das Medium in Richtung (B) vorbei am Sicherheitsteller (5) durch die obere Kammer (13) und dann vorbei am oberen Teller (3) in die Mittelkammer (19) fließt.

6. Dreiwegeregelventil nach Anspruch 1, wobei im Gehäuse (1) auf der Auslass-Seite ein axialer Volumenstromregler (27) angebracht ist, so dass das Medium aus der Mittelkammer (19) durch den axialen Volumenstromregler (27) und danach aus dem Gehäuse in Richtung (C) austritt und der Druck des Mediums in der Unterkammer (20) durch die Impulsbohrung (V+) auf eine Seite der Membran (16) und der Druck des Mediums aus der Mittelkammer (19) durch die Impulsbohrung (V-) auf die andere Seite der Membran (16) wirkt und zusammen mit der Regulierfeder (17) versucht, den axialen Volumenstromregler (27) zu öffnen, der den Volumenstrom reguliert und beide Teller druckentlastet.

7. Dreiwegeregelventil nach Anspruch 1, wobei die Wege des unteren Tellers (24) und des oberen Tellers (3) mit Hilfe eines Wegmessers (M) und Reglers (R) beliebig einstellbar sind und der Volumenstrom in Richtung (A) auf einen anderen Volumenstromwert eingestellt werden kann als der Volumenstrom in Richtung (B), wobei der Weg der Steuerachse (21) mit Hilfe des Wegmessers (M) gemessen und eingestellt wird, der mit dem Regler (R) verbunden ist, in welchem die Daten über die eingestellten Wegbegrenzungen gespeichert sind.

8. Dreiwegeregelventil nach Anspruch 7, wobei im Fall der Aktivierung der Sicherheitsfunktion, wenn die Steuerachse (21) die äußerste obere Lage erreicht und den Sicherheitsteller (5) dicht schließt, die Wegbegrenzung des oberen Tellers (3) nicht funktioniert.
